# EUROPÄISCHE PATENTSCHRIFT

(11) **EP 2 335 065 B1**
(45) Veröffentlichungstag und Bekanntmachung des Hinweises auf die Patenterteilung: **31.12.2014**
(21) Anmeldenummer: 09782960.0
(22) Anmeldetag: 14.09.2009
(51) Int. Cl.: G01N 30/12

(54) **TRANSFEREINHEIT FÜR ANALYSENGERÄTE**
TRANSFER UNIT FOR ANALYSIS DEVICES
UNITÉ DE TRANSFERT POUR APPAREILS D'ANALYSE

(30) Priorität: 06.10.2008 DE 102008037416
(43) Veröffentlichungstag der Anmeldung: 22.06.2011
(73) Patentinhaber: joint analytical systems GmbH, 47445 Moers (DE)
(72) Erfinder: GERSTEL, Joachim, 45475 Mülheim an der Ruhr (DE)
(74) Vertreter: Weisse, Renate
(86) Internationale Anmeldenummer: PCT/EP2009/061858
(87) Internationale Veröffentlichungsnummer: WO 2010/040619

(56) Entgegenhaltungen:
- EP-A2- 0 451 566
- WO-A1-97/10888
- DE-A1- 3 400 458
- DE-A1- 3 738 327
- DE-C1- 10 130 382
- DE-C1- 19 653 406
- US-A- 5 310 681
- US-B1- 6 223 584

## Beschreibung

### Technisches Gebiet

Die Erfindung betrifft eine Transfereinheit für Analysengeräte mit den Merkmalen des Oberbegriffs des Anspruchs 1.

Unter einer Transfereinheit für Analysengeräte werden hier insbesondere auch Probenaufgabeeinrichtungen zum Beispiel für die Gaschromatographie, beheizbare Kühlfallen und Transferleitungen für Fluide verstanden.

### Stand der Technik

Probenaufgabekammern sind beispielsweise bekannt durch einen Aufsatz von Schomburg "Probenaufgabe in der Kapillargaschromatographie" in der DE Zeitschrift "LABO Kennziffer Fachzeitschrift für Labortechnik" Ausgabe Juli 1983 Seiten 37 bis 46 und der DE 34 48 091 C3.

Zum Aufgeben einer flüssigen Probe in einen Gaschromatographen wird die Probe üblicherweise in einem Lösungsmittel gelöst, um handhabbare Mengen zu erhalten. Die gelöste Probe wird mittels einer Injektionsnadel über einen Probenaufgabekopf mit einem Septum oder einem beheizten Ventil in einen Trägergasstrom eingespritzt. Der Trägergasstrom transportiert die Probe und das Lösungsmittel durch ein Verdampferrohr. Das Verdampferrohr, das üblicherweise aus Glas besteht, sitzt in einer Probenaufgabekammer, die durch eine Heizung beheizt wird. Bei der Veröffentlichung in LABO ist die Heizung eine Luftheizung, wobei die Luft durch eine Heizwendel beheizt wird.

Bei der DE 34 48 091 C3 ist die Probenaufgabekammer ein Rohr, das von einer Heizwicklung umgeben ist. Das Verdampferrohr sitzt zentral in der rohrförmigen Probenaufgabekammer. Zwischen Verdampferrohr und Probenaufgabekammer ist ein Ringraum gebildet. Die Probenaufnahmekammer und damit das Verdampferrohr sind programmiert beheizbar. Im "Split"-Betrieb wird erst das leichtflüchtige Lösungsmittel verdampft. Dieses verdampfte Lösungsmittel strömt durch das Verdampferrohr und den Ringraum und wird über einen Split-Auslaß abgeführt. Dann erfolgt durch eine "ballistische" Beheizung auf höhere Temperaturen eine Verdampfung der eigentlichen Probe. Eine Trennsäule, vorzugsweise eine Kapillarsäule, die nur geringe Probenmengen benötigt und verarbeiten kann, ragt mit ihrem Eingangsende in das dem Einlass abgewandte Ende des Verdampferrohres. Die Probe wird von dem Trägergas in die Trennsäule transportiert. Die Trennsäule wird nach einem Temperaturprogramm beheizt. Da sich in dem Verdampferrohr ein größeres Volumen von Probengas gebildet hat, erfolgt am Eingang der Trennsäule eine "Fokussierung" der Probe. Die Temperatur der Trennsäule wird zunächst niedrig gehalten. Das bedingt auch eine geringe Transportgeschwindigkeit aller Komponenten der Probe in der Trennsäule. Am Eingang der Trennsäule bildet sich ein Pfropfen von Probengas. Bei Erhöhung der Temperatur der Trennsäule treten die Unterschiede der Flüchtigkeiten der verschiedenen Probenkomponenten stärker in Erscheinung und führen zu unterschiedlichen Transportgeschwindigkeiten und damit zu einer Auflösung der Probe in "Peaks", die getrennt nacheinander am Ausgang der Trennsäule erscheinen.

Die Temperatur im Verdampferrohr sollte über die Länge des Verdampferrohres hinweg möglichst gleichförmig sein. Sie sollte einem gewünschten Programm möglichst genau und mit geringer Trägheit folgen. Das setzt auch eine genaue Messung der Temperatur voraus.

Diese Bedingungen sind bei dem beschriebenen Stand der Technik nicht oder nur unzureichend erfüllt. Die Beheizung mit Heißluft, wie sie die Veröffentlichung LABO zeigt, ist träge. Das gleiche gilt für die Heizung nach der DE 34 48 091 C3. Dort beheizt eine recht grobe Heizwendel die massive Probenaufnahmekammer, die einen Temperaturausgleich bewirkt und eine über ihre Länge weitgehend konstante Temperatur gewährleistet. Die Konstanz der Temperatur wird durch thermische Trägheit erkauft. Über die Temperaturmessung und -regelung ist in keiner der genannten Druckschriften Näheres gesagt.

EP 12 62 772 A2 offenbart einen temperaturgesteuerten Injektor für Gaschromatographen mit einem Injektorrohr, welches in einem gekühlten Aufnahmerohr angeordnet ist. Das Aufnahmerohr besteht aus gut leitendem Material, das nach außen elektrisch isolierend ist. Der Temperaturfühler der Anordnung ist außen vorgesehen.

WO 97/10888 offenbart eine gepackte Vorsäule, welche mittels einer Heizwendel beheizt wird. Die Heizwendel sitzt zwischen zwei Rohren aus Quarz, welche mit Kappen in ihrer Lage gehalten werden. Zwischen der Vorsäule und dem inneren Quarzrohr kann ein nicht näher beschriebener Temperatursensor angeordnet sein.

### Offenbarung der Erfindung

Der Erfindung liegt die Aufgabe zugrunde, eine Probenaufgabeeinrichtung der eingangs genannten Art so auszubilden, dass sie die präzise Einhaltung eines vorgegebenen Temperaturprogramms am Verdampferrohr gewährleistet.

Erfindungsgemäß wird diese Aufgabe durch eine Anordnung nach Anspruch 1 gelöst. Insbesondere wird die Aufgabe bei einer Probenaufgabeeinrichtung für Gaschromatographen mit einem Probenaufgabekopf dadurch gelöst, dass die Probenkammer eine Probenaufgabekammer ist, in welcher ein Verdampferrohr vorgesehen ist, wobei das Ende einer gaschromatographischen Trennsäule in das Ende einführbar ist, welches dem Probeaufgabekopf abgewandt ist. Ein solcher Temperatursensor, z.B. ein Thermoelement, misst die Temperatur unmittelbar an dem Verdampferrohr, so dass auch die Messgröße der Regelung mit höherer Genauigkeit gemessen wird. Dabei ist es vorteilhaft, wenn das Verdampferrohr eine Einbuchtung aufweist, welche den Temperatursensor in engem wärmeleitenden Kontakt mit der Außenwandung des Verdampferrohres aufnimmt. Die gemessene Temperatur entspricht dann noch besser der Temperatur des Proben- und Trägergases. Außerdem kann die Breite des Ringraumes zum besseren und schnelleren Wärmeübergang auf das Verdampferrohr gering gehalten werden.

Die Baugruppe weist ein zylindrisches Innenrohr auf, auf welches die Heizung in Form einer Heizwicklung aufgewickelt ist, und ein Außenrohr, das auf die Heizwicklung aufgesetzt und durch ein durchmesserverminderndes Verfahren mit dem Innenrohr und der Heizwicklung fest verbunden ist. Die Baugruppe mit der Heizung umfasst ein Innenrohr und ein Außenrohr, die mit relativ geringer Wandstärke und entsprechend geringer Wärmekapazität ausgeführt sein können und zwischen denen die Heizwicklung fest eingeklemmt ist. Die Baugruppe aus Innen- und Außenrohr und der dazwischenliegenden Heizwicklung ist als Ganzes auf ein Injektorrohr aufsteckbar.

Vorteilhafterweise werden die Drähte der Heizwicklung bei Anwendung des durchmesservermindernden Verfahrens flachgedrückt, so dass sie mit Flächenkontakt an dem Innenrohr anliegen. Dann ist ein verbesserter Flächenkontakt zwischen Drähten und Innenrohr und damit ein verbesserter Wärmeübergang gewährleistet.

Weiterhin ist es vorteilhaft, wenn das Innenrohr aus einem Material hoher Wärmeleitfähigkeit wie Messing besteht. Das Außenrohr und das Injektorrohr bestehen vorzugsweise aus einem Material geringer Wärmeleitfähigkeit wie Edelstahl.

Dann erfolgt in der Messingschicht ein Temperaturausgleich in Längsrichtung. Dieser wird ermöglicht durch den radialen Wärmewiderstand der schlecht leitenden Edelstahlschicht. Die Wärme fließt lieber in Längsrichtung im Messing als sofort radial durch den Edelstahl. Da es sich aber um relativ dünne Schichten mit geringer Wärmekapazität handelt, bringt dieser Vorgang keine nennenswerte Trägheit mit sich.

Es ist auch denkbar lediglich Materialien gleich guter Leitfähigkeit zu verwenden. Die geringe Masse schafft einen schnellen Wärmeausgleich.

Das Außenrohr der Probenaufgabekammer besteht vorteilhafterweise aus einem Material geringer Wärmeleitfähigkeit wie Edelstahl. Das reduziert den Wärmeabfluss nach außen.

In einer weiteren Ausgestaltung der Erfindung werden Kühlmedien zur Temperatursteuerung eingesetzt, welche durch den Raum zwischen der Heizwicklung geleitet werden. Im Gegensatz zum Stand der Technik wird der Sensor nicht mehr mit der Heizwicklung mitgewickelt, wodurch ein durchgängiger Hohlraum für Kühlmedien entsteht. Vorteilhafterweise wird der Anschluss von der Heizung mit beheizt.

Ausgestaltungen der Erfindung sind Gegenstand der Unteransprüche. Ein Ausführungsbeispiel der Erfindung ist nachstehend unter Bezugnahme auf die zugehörigen Zeichnungen näher erläutert.

### Kurze Beschreibung der Zeichnungen

- Fig.1: zeigt einen Längsschnitt durch eine Probenaufgabeeinrichtung für einen Gaschromatographen.
- Fig.2: zeigt schematisch einen Querschnitt durch die Probenaufnahmekammer und das Verdampferrohr bei der Probenaufgabeeinrichtung von Fig.1.

### Beschreibung des Ausführungsbeispiels

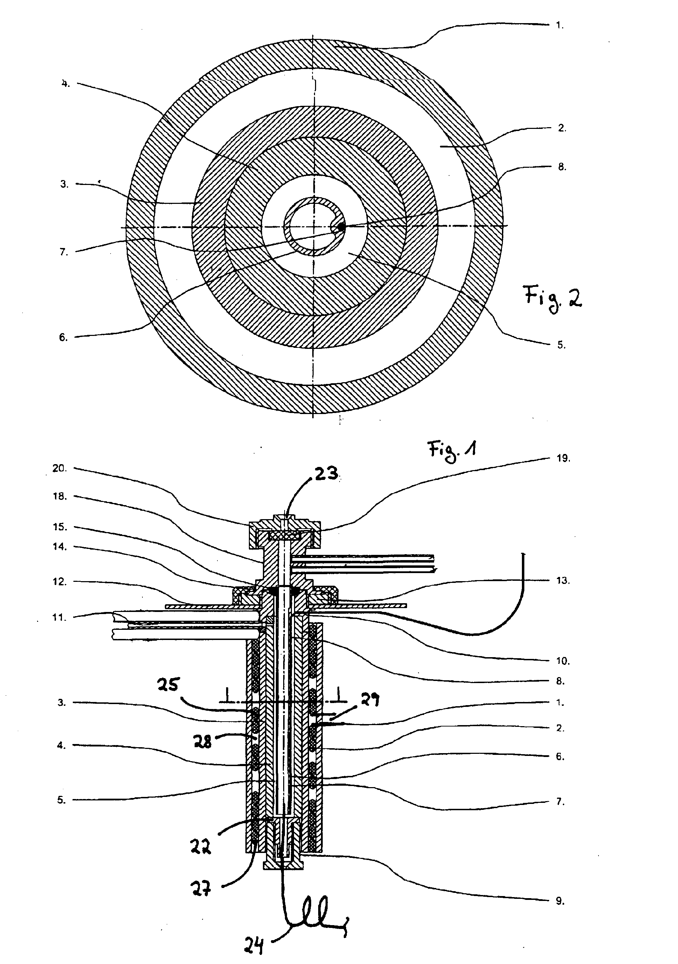

In Fig.1 ist mit 18 ein Probenaufgabekopf bezeichnet. Der Probenaufgabekopf 18 weist einen zentralen Einlasskanal 23 auf, der durch ein Septum 19 abgeschlossen ist. Zur Aufgabe einer flüssigen, in einem leichtflüchtigen Lösungsmittel gelösten Probe wird das Septum 19 von einer Injektionsnadel einer (nicht dargestellten) Spritze durchstochen. Die Injektionsnadel wird durch den Einlasskanal 23 bis in ein zentrales Verdampferrohr 6 aus Glas geführt. In dieses Verdampferrohr wird die Probe mit dem Lösungsmittel dosiert. Über einen Anschluss wird Trägergas in den Einlasskanal 23 eingeleitet.

Das Verdampferrohr 6 wird nach einem Programm beheizt. Das Verdampferrohr 6 sitzt koaxial in einer rohrförmigen Baugruppe. Die Baugruppe weist ein Innenrohr 3 und ein Außenrohr 1 auf. Zwischen Innenrohr 3 und Außenrohr 1 ist eine Heizwicklung 2 gehalten. Die Heizwicklung 2 ist bifilar auf das Innenrohr 3 aufgewickelt. Auf das Innenrohr 3 mit der Heizwicklung 2 ist das Außenrohr 1 aufgesetzt und durch ein durchmesserverminderndes Verfahren mit dem Innenrohr 3 und der Heizwicklung 2 fest verbunden. Dieses durchmesserverminderte Verfahren kann ein Aufschrumpfen aber auch ein Hämmern, Pressen oder Ziehen sein. Es entsteht so ein patronenartiger, integraler Körper, in welchen die Heizwicklung integriert ist.

Bei dem durchmesserveimindernden Verfahren wird der Draht der Heizwicklung 2 flachgedrückt, wie in Figur 1 angedeutet ist. Dadurch ergibt sich ein Flächenkontakt zwischen dem Innenrohr 3 und dem Draht der Heizwicklung 2 und damit ein verbesserter Wärmeübergang.

Das Innenrohr 3 besteht aus einem Material guter Wärmeleitfähigkeit wie Messing. Das Außenrohr besteht aus einem Material geringer Wärmeleitfähigkeit wie Edelstahl. Die Baugruppe ist aufgesteckt auf ein Injektorrohr 4 aus Edelstahl. In dem Injektorrohr 4 ist das Verdampferrohr 6 angeordnet.

Zwischen dem Injektorrohr 4 und dem Verdampferrohr 6 ist ein Ringraum 5 gebildet. Von dem Ringraum 5 geht in der Nähe des einlassseitigen Endes der Baugruppe ein Split-Anschluss 11 zum Ableiten abgedampften Lösungsmittels ab. Das Innere des Verdampferrohres 6 steht über sein offenes, auslassseitiges Ende mit dem Ringraum 5 in Verbindung. Am auslassseitigen Ende der Baugruppe sitzt ein Adapter 22. Der Adapter 22 hält das Einlassende einer Kapillarsäule 24 koaxial zu dem Verdampferrohr 6 so, dass das Einlassende der Kapillarsäule 24 in das Auslassende des Verdampferrohres 6 hineinragt.

Die Baugruppe erstreckt sich mit dem Ende 1 seiner Heizwicklung 2 bis über den Split-Auslass 11 bzw. den Adapter 22. Die Heizwicklung 2 ist in bekannter Weise in einem Mittelbereich weiter gewickelt als in Bereichen zu den Enden hin, so dass durch die zu den Enden 26 und 27 hin erhöhte Heizleistung der Wärmeableitung Rechnung getragen und eine über die Länge der Baugruppe hinweg konstante Temperatur erzielt wird. Darüber hinaus weisen aber die Drähte der Heizwicklung im Bereich der Enden 1 einen größeren Durchmesser auf als im Mittelbereich 25. Dadurch wird die Heizleistung in den über den Split-Auslass 11 sich erstreckenden Enden wieder reduziert. Die volle Heizleistung dient auch zur Beheizung des Adapters 22 und einer Säulenanschlussmutter 9.

In dem Ringraum 5 zwischen Verdampferrohr 6 und Baugruppe ist ein Temperatursensor 8 angeordnet. Der Temperatursensor 8 ist vorzugsweise ein Mantelthermoelement der Bauart Thermocoax®. Das Verdampferrohr 6 weist an einer Seite eine längliche Einbuchtung 7 auf, welche den Temperatursensor 8 in engem wärmeleitenden Kontakt mit der Außenwandung des Verdampferrohres 6 aufnimmt.

In den Hohlraum 28 zwischen der bifilaren Wicklung der Heizwicklung 2 wird bei Bedarf über einen Anschluss 29 zum Kühlen ein Kühlmedium zugeführt.

Die beschriebene Anordnung kann neben der Probenaufgabe bei der Gaschromatographie auch bei der Thermodesorption, verwendet werden. Dann wird ein Thermodesorptionsrohr statt eines Glasliners verwendet. Die Anordnung kann ferner für Headspace verwendet werden.

## Patentansprüche

1. Transfereinheit für Analysengeräte, enthaltend
(a) eine rohrförmige Baugruppe als Probenaufgabekammer,
(b) eine elektrische Heizung (2) zur programmierten Heizung der Probenaufgabekammer,
(c) ein in der Probenaufgabekammer angeordnetes Verdampferrohr (6), in welches an dessen Ende das Ende einer gaschromatographischen Trennsäule einführbar ist, und
(d) Mittel zum Einleiten von Trägergas in das Verdampferrohr (6),
(e) wobei zwischen einer Innenwand der Probenaufgabekammer und dem Verdampferrohr (6) ein Ringraum (5) gebildet ist, mit dem das Innere des Verdampferrohrs (6) über sein offenes, auslassseitiges Ende in Verbindung steht,
(f) wobei die Baugruppe ein zylindrisches Innenrohr (3) aufweist, auf welches die Heizung in Form einer Heizwicklung (2) aufgewickelt ist, und ein Außenrohr (1), das auf die Heizwicklung (2) aufgesetzt und durch ein durchmesserverminderndes Verfahren mit dem Innenrohr (3) und der Heizwicklung (2) fest verbunden ist, so dass ein patronenartiger, integraler Körper entsteht, in welchen die Heizwicklung (2) integriert ist, und
(g) ein Injektorrohr (4)
**dadurch gekennzeichnet, dass**
(h) die Baugruppe als Ganzes auf das Injektorrohr (4) aufgesteckt ist, wobei das Verdampferrohr (6) in dem Injektorrohr (4) angeordnet ist, und
(i) ein Temperatursensor (8) an der Außenwand des Verdampferrohrs (6) angeordnet ist.

2. Transfereinheit nach Anspruch 1, **dadurch gekennzeichnet, dass** die Transfereinheit eine Probenaufgabeeinrichtung für einen Gaschromatographen mit einem Probenaufgabekopf (18) ist, wobei das Ende einer gaschromatographischen Trennsäule in das genannte, auslassseitige Ende einführbar ist, welches dem Probeaufgabekopf (18) abgewandt ist.

3. Transfereinheit nach Anspruch 2, **dadurch gekennzeichnet, dass** die Drähte der Heizwicklung (2) bei Anwendung des durchmesservermindernden Verfahrens flachgedrückt werden, so dass sie mit Flächenkontakt an dem Innenrohr (3) anliegen.

4. Transfereinheit nach einem der vorgehenden Ansprüche, **dadurch gekennzeichnet, dass** das Verdampferrohr (6) eine Einbuchtung aufweist, welche den Temperatursensor (8) in engem wärmeleitenden Kontakt mit der Außenwandung des Verdampferrohres (6) aufnimmt.

5. Transfereinheit nach einem der vorgehenden Ansprüche, **dadurch gekennzeichnet, dass** das Innenrohr (3) aus einem Material hoher Wärmeleitfähigkeit wie Messing und das Außenrohr (1) und das Injektorrohr (4) aus einem Material geringer Wärmeleitfähigkeit wie Edelstahl bestehen.

6. Transfereinheit nach einem der vorgehenden Ansprüche, **dadurch gekennzeichnet, dass** das Verdampferrohr (6) aus Glas oder Quarz besteht.

7. Transfereinheit nach einem der vorgehenden Ansprüche 2 bis 6, **dadurch gekennzeichnet, dass** von dem Ringraum (5) ein Split-Anschluss (11) zum Ableiten abgedampften Lösungsmittels abgeht.

8. Transfereinheit nach einem der vorgehenden Ansprüche 2 bis 7, **dadurch gekennzeichnet, dass** an dem gennanten, auslassseitigen Ende der Baugruppe ein Adapter (22) angebracht ist, in welchem die Trennsäule so gehalten werden kann, dass ihr Ende in das Verdampferrohr (6) hineinragt.

9. Transfereinheit nach Anspruch 7, **dadurch gekennzeichnet, dass** die Baugruppe sich mit dem Ende ihrer Heizwicklung (2) bis über den Bereich des Split-Anschlusses (11) erstreckt.

10. Transfereinheit nach Anspruch 8, **dadurch gekennzeichnet, dass** die Baugruppe sich mit dem Ende ihrer Heizwicklung (2) bis über den Bereich des Adapters (22) erstreckt.

11. Transfereinheit nach Anspruch 9 oder 10, **dadurch gekennzeichnet, dass** die Drähte der Heizwicklung (2) im Bereich der Enden einen größeren Durchmesser aufweisen als im Mittelbereich.

12. Transfereinheit nach einem der vorgehenden Ansprüche, **dadurch gekennzeichnet, dass** Mittel zum Leiten von Kühlmedien durch den Raum zwischen der Heizwicklung zur Temperatursteuerung vorgesehen sind.

## Claims

1. Transfer unit for analytic instruments, comprising
(a) a tubular assembly group as a sampling chamber
(b) an electric heating (2) for programmed heating of the sampling chamber
(c) a vaporizer tube (6) placed inside the sampling chamber adapted to receive the end of a gaschromatographic separating column at its end, and
(d) means for inserting carrier gas into the vaporizer tube (6),
(e) wherein an annular space (5) is formed between the inside of the sampling chamber and the vaporizer tube (6) connected to the inside of the vaporizer tube (6) through its open outlet-side end;
(f) wherein the assembly group is provided with a tubular inner tube (3) having the heating wound thereon in the form of a heating coil (2), and an outer tube (1) mounted on the heating coil (2) and tightly connected to the inner tube (3) and the heating coil (2) in by a diameter reducing method in such a way, that a cartridge-like, integral body is formed with an integrated heating coil (2) and
(g) an injector tube (4)
**characterized in that**
(h) the assembly group is mounted on the injector tube (4) as one entity, wherein the vaporizer tube (6) is arranged inside the injector tube (4), and
(i) a temperature sensor (8) is arranged at the outside of the vaporizer tube (6).

2. Transfer unit according to claim 1, **characterized in that** the transfer unit is a sampling device for gaschromatographs with a sampling head (18) and wherein its end opposite to the sampling head is adapted to receive the mentioned, outlet side end of a gaschromatographic separating column,

3. Transfer unit according to claim 2, **characterized in that** the wires of the heating coil (2) are pressed flat during the application of the diameter reducing method in such a way that they have a plane contact with the inner tube (3).

4. Transfer unit according to any of the preceding claims, **characterized in that** the vaporization tube (6) is provided with a recess receiving the temperature sensor (8) in close heat conducting contact with the outer wall of the vaporization tube (6).

5. Transfer unit according to any of the preceding claims, **characterized in that** the inner tube (3) consists of a material with high conductivity, such as brass and the outer tube (1) and the injector tube (4) of a material having a low thermal conductivity, such as stainless steel.

6. Transfer unit according to any of the preceding claims, **characterized in that** the vaporizer tube (6) consists of glass or quartz.

7. Transfer unit according to any of the preceding claims 2 to 6, **characterized in that** a split connection (11) for removing evaporated solvent is connected to the annular space (5).

8. Transfer unit according to any of the preceding claims 2 to 7, **characterized in that** an adapter (22) is installed at the end of the mentioned, outlet side end of the assembly group, which is held in the separating column in such a way, that its end can extend into the liner (6).

9. Transfer unit according to claim 7, **characterized in that** the assembly extends beyond the range of the split connection (11) with the end of its heating coil (2).

10. Transfer unit according to claim 9, **characterized in that** the assembly group extends beyond the range of the adapter (22) with the end of its heating coil (2).

11. Transfer unit according to claim 9 or 10, **characterized in that** the wires of the heating coil (2) have a larger diameter at their ends than in their middle portion.

12. Transfer unit according to any of the preceding claims, **characterized in that** means are provided for conducting cooling medium through the space between the heating coil for temperature control.

## Revendications

1. Unité de transfert pour appareils d'analyse, comprenant
(a) un groupe de composants tubulaire se présentant sous forme de chambre de chargement d'échantillons,
(b) un chauffage électrique (2) pour le chauffage programmé de la chambre de chargement des échantillons,
(c) un tube d'évaporation (6) disposé dans la chambre de chargement des échantillons dans l'extrémité duquel peut être introduite l'extrémité d'une colonne de séparation pour chromatographie en phase gazeuse, et
(d) des moyens d'introduction d'un gaz porteur dans le tube d'évaporation (6),
(e) un espace annulaire (5), auquel est relié l'intérieur du tube d'évaporation (6) par le biais de son extrémité ouverte située du côté sortie, étant formé entre la paroi intérieure de la chambre de chargement des échantillons et le tube d'évaporation (6),
(f) le groupe de composants présentant un tube intérieur cylindrique (3) sur lequel le chauffage est enroulé sous forme de spirale chauffante (2), et un tube extérieur (1) posé sur la spirale chauffante (2) et relié solidairement au tube intérieur (3) et à la spirale chauffante (2) par un procédé de réduction des diamètres de manière à créer un corps intégral à la manière d'une cartouche dans lequel est insérée la spirale chauffante (2), et
(g) un tube d'injection (4),
**caractérisée en ce que**
(h) le groupe de composants est enfiché en entier sur le tube d'injection (4), le tube d'évaporation (6) étant disposé dans le tube d'injection (4), et
(i) un capteur de température (8) est disposé sur la paroi extérieure du tube d'évaporation (6).

2. Unité de transfert selon la revendication 1, **caractérisée en ce que** l'unité de transfert est un dispositif de chargement d'échantillons pour un chromatographe gazeux muni d'une tête de chargement des échantillons (18), l'extrémité d'une colonne de séparation pour chromatographie en phase gazeuse pouvant être introduite dans l'extrémité citée, située du côté sortie, tournant le dos à la tête de chargement des échantillons (18).

3. Unité de transfert selon la revendication 2, **caractérisée en ce que** les fils de la spirale chauffante (2) sont aplatis en appliquant le procédé de réduction des diamètres de sorte que leur surface est en contact avec le tube intérieur (3).

4. Unité de transfert selon l'une quelconque des revendications précédentes, **caractérisée en ce que** le tube d'évaporation (6) présente un renfoncement logeant le capteur de température (8) en étant en contact étroit avec la paroi extérieure du tube d'évaporation (6) de manière à conduire la chaleur.

5. Unité de transfert selon l'une quelconque des revendications précédentes, **caractérisée en ce que** le tube intérieur (3) se compose d'un matériau de haute conductibilité thermique tel que le laiton, et le tube extérieur (1) et le tube d'injection (4) se composent d'un matériau de faible conductibilité thermique tel que l'acier inoxydable.

6. Unité de transfert selon l'une quelconque des revendications précédentes, **caractérisée en ce que** le tube d'évaporation (6) se compose de verre ou de quartz.

7. Unité de transfert selon l'une quelconque des revendications précédentes 2 à 6, **caractérisée en ce qu**'un raccord de division (11) destiné à évacuer le solvant évaporé part de l'espace annulaire (5).

8. Unité de transfert selon l'une quelconque des revendications précédentes 2 à 7, **caractérisée en ce qu**'un adaptateur (22) dans lequel peut être maintenue la colonne de séparation de sorte que son extrémité émerge dans le tube d'évaporation (6), est placé à l'extrémité citée du groupe de composants, située du côté sortie.

9. Unité de transfert selon la revendication 7, **caractérisée en ce que** le groupe de composants s'étend avec l'extrémité de sa spirale chauffante (2) au-delà de la zone du raccord de division (11).

10. Unité de transfert selon la revendication 7, **caractérisée en ce que** le groupe de composants s'étend avec l'extrémité de sa spirale chauffante (2) au-delà de la zone de l'adaptateur (22).

11. Unité de transfert selon la revendication 9 ou 10, **caractérisée en ce que** les fils de la spirale chauffante (2) présentent un diamètre plus grand dans la zone des extrémités que dans la zone médiane

12. Unité de transfert selon l'une quelconque des revendications précédentes, **caractérisée en ce qu**'il est prévu des moyens destinés à guider des agents refroidissants à travers l'espace situé entre la spirale chauffante afin de commander la température.
